(19) **Europäisches Patentamt European Patent Office Office européen des brevets**

(11) **EP 2 684 289 B1**

(12) **FASCICULE DE BREVET EUROPEEN**

(45) Date de publication et mention de la délivrance du brevet:
**12.12.2018 Bulletin 2018/50**

(21) Numéro de dépôt: **12706060.6**

(22) Date de dépôt: **29.02.2012**

(51) Int Cl.:
*H02P 6/185* (2016.01)  *H02P 21/18* (2016.01)
*H02P 21/14* (2016.01)  *H02P 23/14* (2006.01)
*H02P 6/18* (2016.01)

(86) Numéro de dépôt international:
**PCT/EP2012/053428**

(87) Numéro de publication internationale:
**WO 2012/123255 (20.09.2012 Gazette 2012/38)**

(54) **PROCEDE DE COMMANDE MIS EN OEUVRE DANS UN CONVERTISSEUR DE PUISSANCE POUR IDENTIFIER DES PARAMETRES LIES A LA SATURATION MAGNETIQUE D'UN MOTEUR ELECTRIQUE**

IN EINEM STROMWANDLER IMPLEMENTIERTES STEUERVERFAHREN ZUR IDENTIFIZIERUNG VON PARAMETERN IN BEZUG AUF DIE MAGNETISCHE SÄTTIGUNG EINES ELEKTROMOTORS

CONTROL METHOD IMPLEMENTED IN A POWER CONVERTER AND INTENDED FOR IDENTIFYING PARAMETERS LINKED TO THE MAGNETIC SATURATION OF AN ELECTRIC MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2011 FR 1151997**

(43) Date de publication de la demande:
**15.01.2014 Bulletin 2014/03**

(73) Titulaire: **Schneider Toshiba Inverter Europe SAS 27120 Pacy sur Eure (FR)**

(72) Inventeurs:
- **JEBAI, Al Kassem**
  **F-94230 Cachan (FR)**
- **MALRAIT, François**
  **F-27120 Jouy sur Eure (FR)**
- **MARTIN, Philippe**
  **F-75014 Paris (FR)**
- **ROUCHON, Pierre**
  **F-92190 Meudon (FR)**

(74) Mandataire: **Dufresne, Thierry et al Schneider Electric Industries SAS Service Propriété Industrielle 35 rue Joseph Monier - CS 30323 92506 Rueil-Malmaison Cedex (FR)**

(56) Documents cités:
**EP-A2- 1 492 225**      **EP-A2- 2 290 807**
**US-A1- 2007 132 424**

- **LI Y ET AL: "Improved Rotor Position Estimation by Signal Injection in Brushless AC Motors, Accounting for Cross-Coupling Magnetic Saturation", INDUSTRY APPLICATIONS CONFERENCE, 2007. 42ND IAS ANNUAL MEETING. CONFE RENCE RECORD OF THE 2007 IEEE, IEEE, PI, 1 septembre 2007 (2007-09-01), pages 2357-2364, XP031146247, ISBN: 978-1-4244-1259-4**
- **DAVID REIGOSA ET AL: "Measurement and Adaptive Decoupling of Cross-Saturation Effects and Secondary Saliencies in Sensorless-Controlled IPM Synchronous Machines", INDUSTRY APPLICATIONS CONFERENCE, 2007. 42ND IAS ANNUAL MEETING. CONFE RENCE RECORD OF THE 2007 IEEE, IEEE, PI, 1 septembre 2007 (2007-09-01), pages 2399-2406, XP031146253, ISBN: 978-1-4244-1259-4**

**Description**

La présente invention se rapporte à un procédé de commande mis en oeuvre dans un convertisseur de puissance connecté à un moteur électrique de type synchrone à aimants permanents et permettant d'identifier des paramètres liés à la saturation magnétique du moteur électrique. Le procédé de l'invention permet également d'employer lesdits paramètres lors de la commande du moteur électrique.

Aujourd'hui, dans les convertisseurs de puissance de type variateur de vitesse, la saturation magnétique n'est souvent pas prise en compte dans les modèles des moteurs électriques employés pour le contrôle ou l'identification des paramètres du moteur. Dans la plupart des variateurs actuels, il existe cependant la possibilité de régler un paramètre permettant d'optimiser le couple de sortie en cas de saturation magnétique du moteur électrique. Ce paramètre correspond à une correction d'angle fixée par défaut et appliquée lors de l'exécution de la commande.

Le document JP2010246318 décrit une solution pour optimiser le couple en cas de saturation magnétique. Cette solution consiste à corriger le courant de flux et le courant de couple en tenant compte d'une courbe de saturation fonction de l'inductance mutuelle entre le rotor et le stator. Ce document ne propose pas de solution permettant d'identifier des paramètres liés à la saturation magnétique du moteur électrique.

La publication intitulée ″Measurement and Adaptative Decoupling of Cross Saturation Effects and Secondary Saliencies in Sensorless-Controlled IPM Synchronous Machines" (David Reigosa et al. - XP031146253, ISBN :978-1-4244-1259-4) présente les effets de la saturation magnétique dans les machines synchrones. La méthode proposée dans ce document repose sur des réseaux de neurones. Cette méthode requiert beaucoup de calculs et est donc difficile à mettre en oeuvre.

Il est connu de la publication intitulée ″Improved Rotor Position Estimation by Signal Injection Brushless AC Motors, Accounting for Cross-Coupling Magnetic Saturation" (Li Y et Al - XP031146247, ISBN : 978-1-4244-1259-4) une méthode permettant de déterminer l'influence de la saturation magnétique mutuelle ("cross-coupling") entre le rotor et le stator du moteur. Cette méthode s'applique à un moteur sans balai ("brushless") et n'est pas adaptable sur un moteur électrique synchrone à aimants permanents. En effet, pour pouvoir contrôler un moteur électrique synchrone à aimants permanents, il est nécessaire de caractériser tous les phénomènes de saturation magnétique, c'est-à-dire la saturation magnétique mutuelle entre le stator et le rotor mais aussi les saturations magnétiques intrinsèques du rotor et du stator.

Le but de l'invention est de proposer un procédé de commande simple et fiable pour identifier des paramètres liés à la saturation magnétique d'un moteur électrique synchrone à aimants permanents, en vue de les utiliser ultérieurement pour optimiser le couple en cas de saturation magnétique. Le procédé de l'invention permet d'identifier les paramètres liées à la saturation magnétique mutuelle mais également liés à la saturation intrinsèque du rotor et du stator.

Ce but est atteint par un procédé de commande suivant la revendication 1.

Pour déduire les paramètres de saturation magnétique, la méthode mise en oeuvre dans l'invention s'avère particulièrement simple car elle ne nécessite qu'un calcul élémentaire. Elle est réalisée à l'arrêt et sans employer de capteur de position. Les tensions injectées n'entraînent pas de rotation du moteur.

Selon une particularité, l'étape de détermination des paramètres de saturation magnétique comporte une étape d'extraction de l'amplitude de l'oscillation du courant obtenue.

Selon une autre particularité, l'étape de détermination des paramètres de saturation magnétique comporte une étape d'estimation desdits paramètres de saturation magnétique en fonction de l'amplitude de l'oscillation du courant obtenue.

Selon une autre particularité, la séquence de tension comporte :

- une étape d'application d'un signal en tension statique sur l'axe du couple et d'un signal en tension à haute fréquence sur l'axe du flux, ou
- une étape d'application d'un signal en tension statique sur l'axe de flux et d'un signal en tension à haute fréquence sur l'axe du couple.

Selon une autre particularité, le procédé comporte une étape d'utilisation desdits paramètres de saturation pour déterminer une correction sur l'erreur d'angle existant entre la position d'un repère de commande défini par l'axe de flux et l'axe de couple et une position du rotor du moteur électrique.

Selon une autre particularité, ladite correction est appliquée à l'erreur d'angle. Selon une variante de réalisation, la correction est appliquée à un courant de flux de référence et à un courant de couple de référence déterminés en entrée de la loi de commande.

L'invention concerne un convertisseur de puissance suivant la revendication 8. Ce convertisseur de puissance est par exemple un variateur de vitesse.

D'autres caractéristiques et avantages vont apparaître dans la description détaillée qui suit en se référant à un mode de réalisation donné à titre d'exemple et représenté par les dessins annexés sur lesquels :

- les figures 1A à 1C, 2A à 2C, 3A à 3C et 4A à 4C représentent sous forme de graphiques, respectivement, les séquences de tension appliquées permettant d'identifier les paramètres liés à la saturation magnétique du moteur électrique, les réponses en courant obtenues et l'expression des amplitudes des oscillations,

- les figures 5A et 5B représentent de manière simplifiée une injection d'un signal en tension haute fréquence et l'oscillation de courant obtenue,

- la figure 6 représente un synoptique de contrôle employant les paramètres liés à la saturation magnétique du moteur électrique.

L'invention concerne un procédé de commande mis en oeuvre dans un convertisseur de puissance de type variateur de vitesse connecté à un moteur électrique M synchrone à aimants permanents (appelé "PMSM").

De manière connue, un convertisseur de puissance de type variateur de vitesse est connecté en amont à un réseau électrique et en aval au moteur électrique. Le variateur de vitesse comporte :

- en entrée, un module redresseur composé en règle générale d'un pont de diodes destiné à redresser la tension alternative fournie par le réseau électrique,

- un bus continu d'alimentation sur lequel est appliquée la tension redressée par le module redresseur, le bus continu d'alimentation étant doté d'un condensateur de bus permettant de maintenir la tension du bus à une valeur constante,

- en sortie, un module onduleur INV destiné à transformer la tension du bus continu en une tension variable à appliquer au moteur électrique M.

Le module onduleur INV est commandé en employant une loi de commande déterminée exécutée par des moyens de commande. La loi de commande consiste à calculer les tensions à appliquer au moteur électrique en fonction d'une consigne de vitesse statorique à donner au moteur électrique.

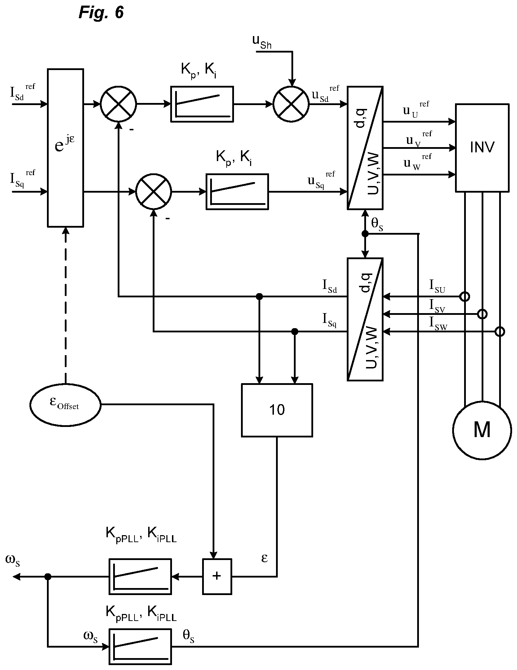

La figure 6 représente, sous forme d'un synoptique, une loi de commande applicable à un module onduleur INV pour la commande d'un moteur électrique M. Selon l'invention, ce synoptique intègre la prise en compte de la saturation magnétique du moteur électrique et permet d'optimiser le couple appliqué au moteur en cas de saturation magnétique du moteur électrique.

Pour tenir compte de la saturation magnétique dans la loi de commande, l'invention consiste à déterminer préalablement des paramètres $\alpha_{x,y}$ liés à la saturation magnétique du moteur électrique. Ces paramètres $\alpha_{x,y}$ sont identifiés en dehors du fonctionnement normal du variateur de vitesse, par exemple lors d'une procédure d'apprentissage.

Selon l'invention, certains de ces paramètres de saturation magnétique sont employés pour déterminer, lors du fonctionnement normal du moteur, une correction de l'erreur d'angle existant entre la position du repère de commande (axes d et q) et la position du rotor (c'est-à-dire de l'aimant permanent).

L'invention consiste d'abord en un procédé de commande permettant de déterminer les paramètres $\alpha_{x,y}$ liés à la saturation magnétique du moteur électrique. Pour cela, on utilise un modèle mathématique du moteur électrique synchrone à aimants permanents incluant la saturation magnétique. Sous une approche Hamilton-Lagrange, le modèle mathématique du moteur électrique synchrone à aimants permanents, incluant le phénomène de saturation magnétique, suit par exemple l'expression suivante :

$$H_{mS}\left(\psi_{Sd}, \psi_{Sq}\right) = \frac{\psi_{Sd}^{2}}{2 \cdot L_{d}} + \frac{\psi_{Sq}^{2}}{2 \cdot L_{q}} \qquad (1)$$
$$+ \alpha_{3,0} \cdot \psi_{Sd}^{3} + \alpha_{1,2} \cdot \psi_{Sd}\psi_{Sq}^{2} + \alpha_{4,0} \cdot \psi_{Sd}^{4} + \alpha_{2,2} \cdot \psi_{Sd}^{2}\psi_{Sq}^{2} + \alpha_{0,4} \cdot \psi_{Sq}^{4}$$

A partir de cette expression, on en déduit :

$$\frac{d}{dt}\psi_{S} = u_{S} - R_{S} \cdot I_{S} - j \cdot \omega \cdot \left(\psi_{S} + \varphi_{m}\right)$$
$$\frac{J}{n_{p}}\frac{d}{dt}\omega = \tau_{EM} - \tau \qquad (2)$$

Avec

$$I_S = 2 \frac{\partial H_{mS}}{\partial \psi_S^*} = I_{Sd} + j \cdot I_{Sq}$$

$$I_{Sd} = \frac{\psi_{Sd}}{L_d} + 3 \cdot \alpha_{3,0} \cdot \psi_{Sd}^2 + \alpha_{1,2} \cdot \psi_{Sq}^2 + 4 \cdot \alpha_{4,0} \cdot \psi_{Sd}^3 + 2 \cdot \alpha_{2,2} \cdot \psi_{Sd} \psi_{Sq}^2 \quad (3)$$

$$I_{Sq} = \frac{\psi_{Sq}}{L_q} + 2 \cdot \alpha_{1,2} \cdot \psi_{Sd} \psi_{Sq} + 2 \cdot \alpha_{2,2} \cdot \psi_{Sd}^2 \psi_{Sq} + 4 \cdot \alpha_{0,4} \cdot \psi_{Sq}^3$$

$$\tau_{EM} = np \cdot \left( I_{Sq} \cdot (\psi_{Sd} + \varphi_m) - I_{Sd} \cdot \psi_{Sq} \right)$$

Dans lesquelles :

$\psi_S$ : écriture complexe du flux de fuite stator $\psi_{Sd} + j \cdot \psi_{Sq}$,

$\varphi_m$ : flux permanent,

$\psi_{Sd}$ : flux de fuite stator d'axe d,

$\psi_{Sq}$ : flux de fuite stator d'axe q,

$L_d$ : inductance d'axe d,

$L_q$ : inductance d'axe q,

$u_S$ : tension stator,

$R_S$ : résistance stator,

$I_S$ : courant stator,

$\omega$ : vitesse rotor (correspondant à $n_p$ x vitesse mécanique),

$J$ : inertie,

$n_p$ : nombre de paires de pôles,

$\tau_{EM}$ : couple électromagnétique,

$\tau$ : couple moteur,

$\alpha_{x,y}$ : paramètres de saturation magnétique.

L'invention consiste à identifier les paramètres de saturation magnétique évoqués dans les relations écrites ci-dessus. Ce modèle mathématique prend en compte tous les types et effets de saturation magnétique du moteur électrique, c'est-à-dire la saturation mutuelle entre le stator et le rotor et la saturation intrinsèque du rotor et du stator.

Ces paramètres sont donc désignés $\alpha_{3,0}$, $\alpha_{1,2}$, $\alpha_{4,0}$, $\alpha_{2,2}$, $\alpha_{0,4}$. Pour identifier ces paramètres, le principe d'identification mis en oeuvre par le programme de commande de l'invention consiste à injecter deux types de signaux en tension sur l'axe du flux (ci-après axe d) et/ou sur l'axe du couple (ci-après axe q). Le premier signal en tension est statique et le deuxième signal en tension est à haute fréquence. Par signal statique, on entend un signal continu sur une certaine durée, ce signal statique pouvant prendre différents niveaux au cours du temps.

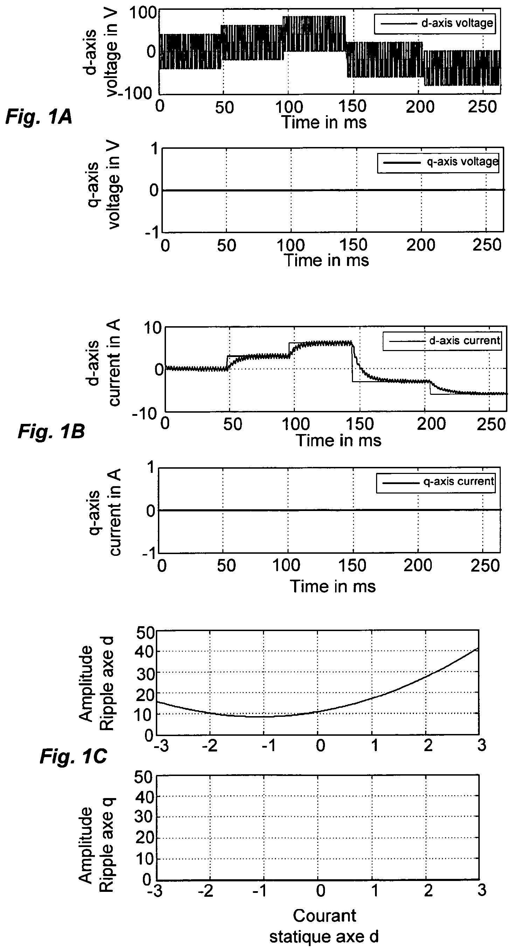

Les figures 1A, 2A, 3A et 4A montrent les injections des signaux en tension qui permettent de déterminer les paramètres de saturation magnétique. Pour chaque injection de signal en tension, on obtient une réponse en courant $I_{Sd}$ sur l'axe d et/ou une réponse en courant $I_{Sq}$ sur l'axe q nous permettant de déterminer les paramètres de saturation. Ces réponses en courant sont représentées sur les figures 1B, 2B, 3B et 4B. Ce principe d'identification s'explique par le raisonnement suivant :

Une tension $u_S$ incluant une partie statique et une partie haute fréquence s'exprime de la manière suivante :

$$u_S = u_{Sd} + j \cdot u_{Sq} \text{ avec } u_{Sd} = \overline{u}_{Sd} + \tilde{u}_{Sd} \cdot f(\Omega \cdot t), u_{Sq} = \overline{u}_{Sq} + \tilde{u}_{Sq} \cdot f(\Omega \cdot t)$$

Dans laquelle $\overline{u}_S$ représente sa partie statique (sur l'axe d ou sur l'axe q), $\tilde{u}_S$ représente sa partie haute fréquence (sur l'axe d ou sur l'axe q), f est une fonction périodique et F sa primitive centrée.

Nous obtenons ainsi les expressions :

- du flux

$$\psi_{Sd} = \overline{\psi}_{Sd} + \frac{\tilde{u}_{Sd}}{\Omega} \cdot F(\Omega \cdot t) + O\left(\frac{1}{\Omega^2}\right), \psi_{Sq} = \overline{\psi}_{Sq} + \frac{\tilde{u}_{Sq}}{\Omega} \cdot F(\Omega \cdot t) + O\left(\frac{1}{\Omega^2}\right)$$

- du courant

$$I_{Sd} = \overline{I}_{Sd} + \tilde{I}_{Sd} \cdot F(\Omega \cdot t) + O\left(\frac{1}{\Omega^2}\right), I_{Sq} = \overline{I}_{Sq} + \tilde{I}_{Sq} \cdot F(\Omega \cdot t) + O\left(\frac{1}{\Omega^2}\right)$$

Dans lesquelles, $\overline{I}_{Sd}$ et $\overline{I}_{Sq}$ représentent les composantes statiques des courants de flux et de couple et $\tilde{I}_{Sd}$ et $\tilde{I}_{Sq}$ représentent les oscillations des courants de flux et de couple.

Nous obtenons au premier ordre en $\Omega$ et $\alpha$ (c'est-à-dire en utilisant les relations $\psi_{Sd} \approx L_d \cdot I_{Sd}$ et $\psi_{Sq} \approx L_q \cdot I_{Sq}$) :

$$\Omega \cdot \tilde{I}_{Sd} = \frac{\tilde{u}_{Sd}}{L_d} + 6 \cdot \alpha_{3,0} \cdot L_d \cdot \overline{I}_{Sd} \cdot \tilde{u}_{Sd} + 2 \cdot \alpha_{1,2} \cdot L_q \cdot \overline{I}_{Sq} \cdot \tilde{u}_{Sq}$$

$$+ 2 \cdot \alpha_{2,2} \cdot L_q \cdot \overline{I}_{Sq} \cdot \left(2 \cdot L_d \cdot \overline{I}_{Sd} \cdot \tilde{u}_{Sq} + L_q \cdot \overline{I}_{Sq} \cdot \tilde{u}_{Sd}\right) + 12 \cdot \alpha_{4,0} \cdot L_d^2 \cdot \overline{I}_{Sd}^2 \cdot \tilde{u}_{Sd}$$

$$\Omega \cdot \tilde{I}_{Sq} = \frac{\tilde{u}_{Sq}}{L_q} + 2 \cdot \alpha_{1,2} \cdot \left(L_d \cdot \overline{I}_{Sd} \cdot \tilde{u}_{Sq} + L_q \cdot \overline{I}_{Sq} \cdot \tilde{u}_{Sd}\right)$$

$$+ 2 \cdot \alpha_{2,2} \cdot L_d \cdot \overline{I}_{Sd} \cdot \left(L_d \cdot \overline{I}_{Sd} \cdot \tilde{u}_{Sq} + 2 \cdot L_q \cdot \overline{I}_{Sq} \cdot \tilde{u}_{Sd}\right) + 12 \cdot \alpha_{0,4} \cdot L_q^2 \cdot \overline{I}_{Sq}^2 \cdot \tilde{u}_{Sq}$$

$$\text{(4)}$$

Comme les oscillations de courant $\tilde{I}_{Sd}$ et $\tilde{I}_{Sq}$ peuvent être extraites de la mesure des courants $I_{Sd}$ et $I_{Sq}$, nous obtenons à travers (4) des relations qui permettent le calcul des paramètres de saturation.

Les figures 1A, 2A, 3A, 4A montrent quatre cas particuliers d'injection de signaux en tension (statique et haute fréquence) sur les axes d et q permettant d'extraire les oscillations de courant $\tilde{I}_{Sd}$ et $\tilde{I}_{Sq}$ sur l'axe du flux d et l'axe du couple q.

Sur la figure 1A, un signal en tension statique est appliqué sur l'axe d et un signal en tension haute fréquence est appliqué sur l'axe d. La figure 1B montre la réponse en courant correspondante.

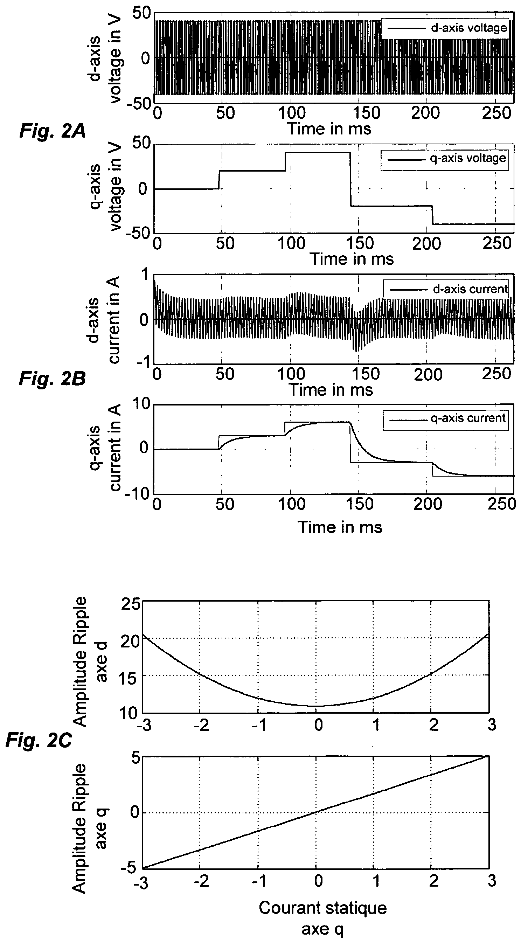

Sur la figure 2A, un signal en tension statique est appliqué sur l'axe q et un signal en tension haute fréquence est appliqué sur l'axe d. La figure 2B montre la réponse en courant correspondante.

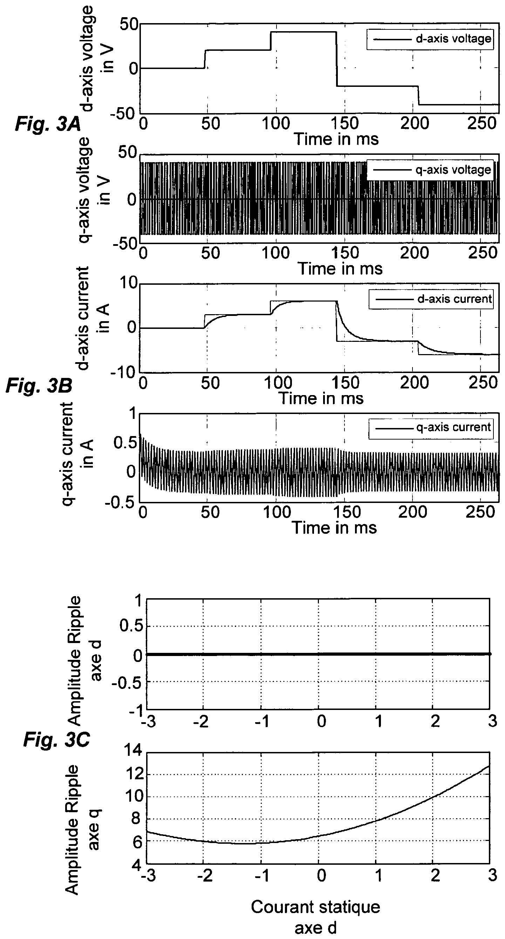

Sur la figure 3A, un signal en tension statique est appliqué sur l'axe d et un signal en tension haute fréquence est appliqué sur l'axe q. La figure 3B montre la réponse en courant correspondante.

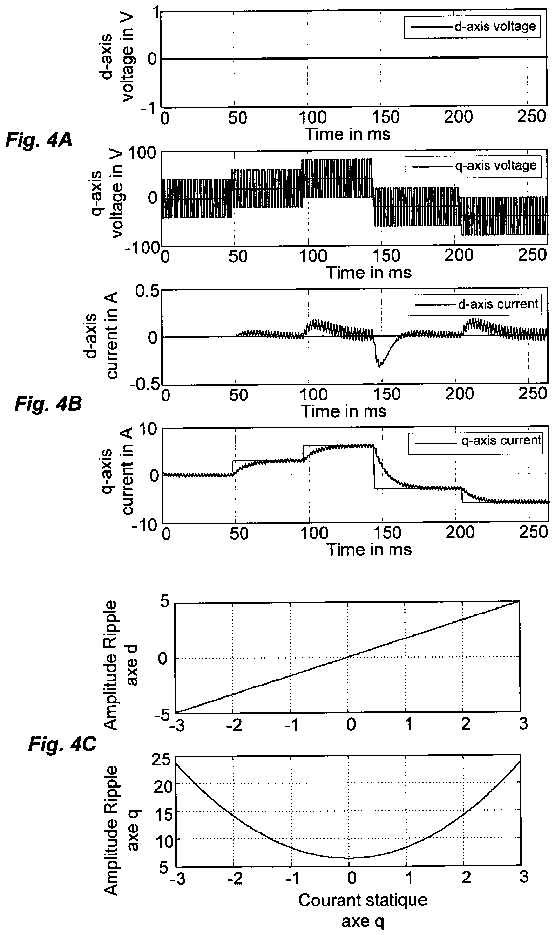

Sur la figure 4A, un signal en tension statique est appliqué sur l'axe q et un signal en tension haute fréquence est appliqué sur l'axe q. La figure 4B montre la réponse en courant correspondante.

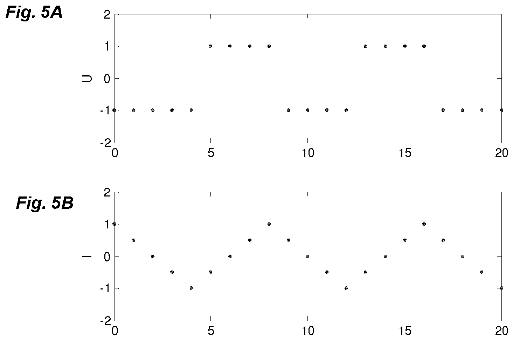

Comme représenté sur la figure 5A, le signal en tension haute fréquence peut être un signal carré. Dans ce cas, les oscillations de courant $\tilde{I}_{Sd}$ et $\tilde{I}_{Sq}$ obtenues (figure 5B) sont sous la forme d'un signal triangulaire dont il est aisé d'extraire les amplitudes à chaque période du signal d'injection.

Sur les figures 1C, 2C, 3C et 4C, on peut voir que l'amplitude des oscillations du courant varie en fonction du niveau du courant statique obtenu. Ces variations suivent des relations linéaires ou quadratiques. Une méthode classique de moindres carrés permet alors d'estimer les paramètres $\alpha_{x,y}$ de saturation magnétique désignés ci-dessus.

Par exemple :

Soit le système $y = a \cdot x^2 + b \cdot x + c$, où $a,b,c$ sont des paramètres à estimer et $x,y$ des signaux connus.

L'estimation des paramètres $a,b,c$ par les moindres carrés s'obtient par la formulation matricielle :

$$\begin{bmatrix} \vdots \\ y_k \\ \vdots \end{bmatrix} = \begin{bmatrix} \vdots & \vdots & \vdots \\ x_k^2 & x_k & 1 \\ \vdots & \vdots & \vdots \end{bmatrix} \begin{bmatrix} a \\ b \\ c \end{bmatrix},$$

qui fournit

$$\begin{bmatrix} a \\ b \\ c \end{bmatrix} = \mathrm{inv}\left( \begin{bmatrix} \vdots & \vdots & \vdots \\ x_k^2 & x_k & 1 \\ \vdots & \vdots & \vdots \end{bmatrix}^T \begin{bmatrix} \vdots & \vdots & \vdots \\ x_k^2 & x_k & 1 \\ \vdots & \vdots & \vdots \end{bmatrix} \right) \times \left( \begin{bmatrix} \vdots & \vdots & \vdots \\ x_k^2 & x_k & 1 \\ \vdots & \vdots & \vdots \end{bmatrix}^T \begin{bmatrix} \vdots \\ y_k \\ \vdots \end{bmatrix} \right),$$

soit

$$\begin{bmatrix} a \\ b \\ c \end{bmatrix} = \mathrm{inv}\left( \begin{bmatrix} \sum x_k^4 & \sum x_k^3 & \sum x_k^2 \\ \sum x_k^3 & \sum x_k^2 & \sum x_k \\ \sum x_k^2 & \sum x_k & \sum 1 \end{bmatrix} \right) \times \begin{bmatrix} \sum x_k^2 y_k \\ \sum x_k y_k \\ \sum y_k \end{bmatrix},$$

où $(y_k, x_k)$ sont les données mesurées :

- $y_k$ : amplitude des oscillations de courant pour l'essai $k$,
- $x_k$ : valeur du courant statique pour l'essai $k$.

Une fois les paramètres $\alpha_{x,y}$ de saturation magnétique déterminés, ceux-ci peuvent être employés, lors du fonctionnement normal du moteur, dans l'exécution de la loi de commande par le variateur de vitesse.

Pour cela, la loi de commande telle que représentée en figure 6 se trouve être un peu différente d'une loi de commande standard puisqu'elle inclut le traitement de la saturation magnétique du moteur.

La loi de commande comporte un courant de flux de référence $I_{Sd}^{ref}$ et un courant de couple de référence $I_{Sq}^{ref}$, à partir desquels sont déterminées une tension de flux de référence $u_{Sd}^{ref}$ et une tension de couple de référence $u_{Sq}^{ref}$. Sur la tension de flux de référence $u_{Sd}^{ref}$ est appliqué un signal en tension haute fréquence $u_{Sh}$ permettant de générer des oscillations de courant sur l'axe de flux d. A partir de la tension de flux de référence $u_{Sd}^{ref}$ et de la tension de couple de référence $u_{Sq}^{ref}$, la loi de commande génère les tensions de référence $u_U^{ref}$, $u_V^{ref}$, $u_W^{ref}$ pour les trois phases U, V, W connectant l'onduleur INV au moteur M. En fonction des tensions de référence $u_U^{ref}$, $u_V^{ref}$, $u_W^{ref}$, l'onduleur génère les tensions correspondantes qui créent les courants $I_{SU}$, $I_{SV}$, $I_{SW}$ dans les trois phases U, V, W du moteur. Ces courants sont mesurés et traités par la loi de commande pour les convertir en courant de flux et de couple, $I_{Sd}$, $I_{Sq}$ qui sont réinjectés en entrée pour régulation. A partir des courants de flux et de couple $I_{Sd}$, $I_{Sq}$ mesurés, la loi de commande calcule une erreur d'angle $\varepsilon$ (bloc 10) correspondant à la différence entre la position du repère de commande (axes d et q) et la position du rotor (c'est-à-dire de l'aimant permanent). A cette erreur d'angle $\varepsilon$, la loi de commande ajoute une correction correspondant à la prise en compte de la saturation magnétique. L'erreur d'angle ainsi corrigée permet ensuite d'évaluer la vitesse statorique en appliquant des gains $K_p$ et $K_i$.

D'un point de vue détaillé, lorsque nous écrivons le modèle moteur dans le repère rotor à l'arrêt, nous obtenons :

$$\frac{d}{dt}\psi_S = u_S - R_S \cdot I_S - j \cdot \omega_S \cdot \left( \psi_S + \varphi_m \cdot e^{j\varepsilon} \right) \quad (5)$$

avec $\varepsilon$ l'erreur d'angle entre le repère de commande et la position du rotor

$$I_S = \left(I'_{Sd} + jI'_{Sq}\right) \cdot e^{-j\varepsilon} \qquad \psi_S = \left(\psi'_{Sd} + j\psi'_{Sq}\right) \cdot e^{-j\varepsilon}$$

$$I'_{Sd} = \frac{\psi'_{Sd}}{L_d} + 3 \cdot \alpha_{3,0} \cdot \psi'^2_{Sd} + \alpha_{1,2} \cdot \psi'^2_{Sq} + 4 \cdot \alpha_{4,0} \cdot \psi'^3_{Sd} + 2 \cdot \alpha_{2,2} \cdot \psi'_{Sd} \psi'^2_{Sq}$$

$$\tag{6}$$

$$I'_{Sq} = \frac{\psi'_{Sq}}{L_q} + 2 \cdot \alpha_{1,2} \cdot \psi'_{Sd} \psi'_{Sq} + 2 \cdot \alpha_{2,2} \cdot \psi'^2_{Sd} \psi'_{Sq} + 4 \cdot \alpha_{0,4} \cdot \psi'^3_{Sq}$$

$$\tau_{EM} = np \cdot \text{Im}\left(I_S \cdot \left(\psi_S + \varphi_m \cdot e^{j\varepsilon}\right)^*\right)$$

Au premier ordre en $\varepsilon$, les équations (6) deviennent :

$$I_{Sd} = \left(\begin{array}{l} \dfrac{\psi_{Sq}}{L_d} - \dfrac{\psi_{Sq}}{L_q} + 6 \cdot \alpha_{3,0} \cdot \psi_{Sd} \cdot \psi_{Sq} - 4 \cdot \alpha_{1,2} \cdot \psi_{Sd} \cdot \psi_{Sq} + 12 \cdot \alpha_{4,0} \cdot \psi_{Sd}^2 \cdot \psi_{Sq} \\ + 2 \cdot \alpha_{2,2} \cdot \psi_{Sq}^3 - 6 \cdot \alpha_{2,2} \cdot \psi_{Sd}^2 \psi_{Sq} - 4 \cdot \alpha_{0,4} \cdot \psi_{Sq}^3 \end{array}\right) \cdot \varepsilon$$

$$+ \left(\frac{\psi_{Sd}}{L_d} + 3 \cdot \alpha_{3,0} \cdot \psi_{Sd}^2 + \alpha_{1,2} \cdot \psi_{Sq}^2 + 4 \cdot \alpha_{4,0} \cdot \psi_{Sd}^3 + 2 \cdot \alpha_{2,2} \cdot \psi_{Sd} \psi_{Sq}^2\right)$$

$$\tag{7}$$

$$I_{Sq} = \left(\begin{array}{l} \dfrac{\psi_{Sd}}{L_d} - \dfrac{\psi_{Sd}}{L_q} + 3 \cdot \alpha_{3,0} \cdot \psi_{Sd}^2 + 3 \cdot \alpha_{1,2} \cdot \psi_{Sq}^2 - 2 \cdot \alpha_{1,2} \cdot \psi_{Sd}^2 + 12 \cdot \alpha_{0,4} \cdot \psi_{Sd} \cdot \psi_{Sq}^2 \\ - 2 \cdot \alpha_{2,2} \cdot \psi_{Sd}^3 + 6 \cdot \alpha_{2,2} \cdot \psi_{Sd} \psi_{Sq}^2 + 4 \cdot \alpha_{4,0} \cdot \psi_{Sd}^3 \end{array}\right) \cdot \varepsilon$$

$$+ \left(\frac{\psi_{Sq}}{L_q} + 2 \cdot \alpha_{1,2} \cdot \psi_{Sd} \psi_{Sq} + 4 \cdot \alpha_{0,4} \cdot \psi_{Sq}^3 + 2 \cdot \alpha_{2,2} \cdot \psi_{Sd}^2 \psi_{Sq}\right)$$

Définissons la tension, avec une injection de tension sur l'axe d :

$$u_S = \overline{u}_{Sdq} + \tilde{u}_{Sd} \cdot f\left(\Omega \cdot t\right)$$

où $\overline{u}_{Sdq}$ est la tension appliquée par une commande standard.

Il vient sur la base de la relation (5) :

$$I_S = \overline{I}_S + \tilde{I}_S \cdot F\left(\Omega \cdot t\right) + O\left(\frac{1}{\Omega^2}\right)$$

$$\psi_S = \overline{\psi}_S + \frac{\tilde{u}_{Sd}}{\Omega} \cdot F\left(\Omega \cdot t\right) + O\left(\frac{1}{\Omega^2}\right) \tag{8}$$

où $\overline{\psi}_S$ représente la partie correspondant à la commande standard.

Maintenant nous réinjectons la valeur du flux (8) dans les relations (7) pour isoler l'oscillation du courant au premier ordre. On obtient alors :

$$\tilde{I}_{Sd} = \left(6 \cdot \alpha_{3,0} \cdot \psi_{Sq} - 4 \cdot \alpha_{1,2} \cdot \psi_{Sq} + 24 \cdot \alpha_{4,0} \cdot \psi_{Sd} \cdot \psi_{Sq} - 12 \cdot \alpha_{2,2} \cdot \psi_{Sd}\psi_{Sq}\right) \cdot \frac{\tilde{u}_{Sd}}{\Omega} \cdot \varepsilon$$

$$+ \left(\frac{1}{L_d} + 6 \cdot \alpha_{3,0} \cdot \psi_{Sd} + 8 \cdot \alpha_{4,0} \cdot \psi_{Sd}{}^2 + 2 \cdot \alpha_{2,2} \cdot \psi_{Sq}{}^2\right) \cdot \frac{\tilde{u}_{Sd}}{\Omega}$$

$$\tilde{I}_{Sq} = \left(\begin{array}{l} \dfrac{1}{L_d} - \dfrac{1}{L_q} + 6 \cdot \alpha_{3,0} \cdot \psi_{Sd} - 4 \cdot \alpha_{1,2} \cdot \psi_{Sd} \\[2mm] + 12 \cdot \alpha_{0,4} \cdot \psi_{Sq}{}^2 - 6 \cdot \alpha_{2,2} \cdot \psi_{Sd}{}^2 + 6 \cdot \alpha_{2,2} \cdot \psi_{Sq}{}^2 + 12 \cdot \alpha_{4,0} \cdot \psi_{Sd}{}^2 \end{array}\right) \cdot \frac{\tilde{u}_{Sd}}{\Omega} \cdot \varepsilon \qquad (9)$$

$$+ \left(2 \cdot \alpha_{1,2} \cdot \psi_{Sq} + 4 \cdot \alpha_{2,2} \cdot \psi_{Sd}\psi_{Sq}\right) \cdot \frac{\tilde{u}_{Sd}}{\Omega}$$

En cas de saturation magnétique, sans injection de courant sur l'axe de flux d, on peut exprimer l'erreur d'angle $\varepsilon$ en fonction de l'oscillation du courant et d'une correction permettant d'optimiser le couple produit. On obtient alors :

$$\tilde{I}_{Sq} = \frac{1}{L} \cdot \frac{\tilde{u}_{Sd}}{\Omega} \cdot \varepsilon + \tilde{I}_{SqOffset} \qquad (10)$$

avec

$$\frac{1}{L} = \frac{1}{L_d} - \frac{1}{L_q} + \left(6 \cdot \alpha_{3,0} - 4 \cdot \alpha_{1,2}\right) \cdot L_d \cdot I_{Sd} + \left(12 \cdot \alpha_{0,4} + 6 \cdot \alpha_{2,2}\right) \cdot L_q{}^2 \cdot I_{Sq}{}^2 + \left(12 \cdot \alpha_{4,0} - 6 \cdot \alpha_{2,2}\right) \cdot L_d{}^2 \cdot I_{Sd}$$

$$\tilde{I}_{SqOffset} = \left(2 \cdot \alpha_{1,2} + 4 \cdot \alpha_{2,2} \cdot L_d \cdot I_{Sd}\right) \cdot L_q \cdot I_{Sq} \cdot \frac{\tilde{u}_{Sd}}{\Omega}$$

La relation (10) peut ainsi être réécrite de la manière suivante :

$$\frac{L \cdot \Omega \cdot \tilde{I}_{Sq}}{\tilde{u}_{Sd}} = \varepsilon + \frac{L \cdot \Omega \cdot \tilde{I}_{SqOffset}}{\tilde{u}_{Sd}} = \varepsilon + \varepsilon_{Offset}$$

Dans laquelle $\varepsilon_{Offset}$ correspond à la correction sur l'erreur d'angle à prendre en compte en cas de saturation magnétique du moteur électrique, cette correction étant fonction des paramètres de saturation magnétique $\alpha_{1,2}$ et $\alpha_{2,2}$. Il est intéressant de noter que la connaissance seule de ces deux paramètres suffit pour déterminer la correction à appliquer. Le principe d'identification des paramètres décrit ci-dessus pourrait donc se limiter à ces seuls paramètres.

Sur la figure 6, on peut voir que la correction $\varepsilon_{Offset}$ déterminée peut être injectée directement sur l'erreur d'angle $\varepsilon$ ou appliquée en entrée pour corriger le courant de flux de référence $I_{Sd}{}^{ref}$ et le courant de couple de référence $I_{Sq}{}^{ref}$. La structure de loi de commande permet ainsi de réguler l'erreur d'angle $\varepsilon$ à zéro même en cas de saturation magnétique du moteur électrique.

Le couple obtenu à partir du courant de couple et de l'angle $\varepsilon$ est $\tau_{EM} = np \cdot I_{Sq} \cdot \varphi_m \cdot \cos(\varepsilon)$. Le courant consommé pour fournir un couple donné est minimal lorsque l'angle $\varepsilon$ est nul.

## Revendications

1. Procédé de commande mis en oeuvre dans un convertisseur de puissance comportant un onduleur (INV) connecté à un moteur électrique (M) synchrone à aimants permanents comportant un rotor et un stator, ledit moteur électrique (M) étant modélisé dans le convertisseur de puissance par un modèle mathématique des courants du moteur électrique exprimant un courant de flux ($I_{Sd}$) et un courant de couple ($I_{Sq}$) en fonction de paramètres ($\alpha_{x,y}$) de saturation magnétique, représentatifs de la saturation magnétique mutuelle entre le rotor et le stator du moteur électrique et de la saturation magnétique intrinsèque du rotor et du stator, le procédé de commande comportant :

- une étape d'application au moteur électrique d'une séquence de tension comportant un signal en tension statique et un signal en tension à haute fréquence suivant l'axe du flux et/ou l'axe du couple du moteur, entraînant une oscillation du courant sur l'axe du flux et/ou sur l'axe du couple,

    - une étape de mesure de l'oscillation du courant obtenue sur l'axe du flux et/ou sur l'axe du couple, - une étape de détermination des paramètres de saturation,

**caractérisé en ce que** le modèle mathématique du moteur électrique est de type Hamilton-Lagrange et suit l'expression suivante :

$$H_{mS}\left(\psi_{Sd}, \psi_{Sq}\right) = \frac{\psi_{Sd}^2}{2 \cdot L_d} + \frac{\psi_{Sq}^2}{2 \cdot L_q}$$

$$+ \alpha_{3,0} \cdot \psi_{Sd}^3 + \alpha_{1,2} \cdot \psi_{Sd}\psi_{Sq}^2 + \alpha_{4,0} \cdot \psi_{Sd}^4 + \alpha_{2,2} \cdot \psi_{Sd}^2 \psi_{Sq}^2 + \alpha_{0,4} \cdot \psi_{Sq}^4$$

Dans laquelle :

$\psi_S$ : écriture complexe du flux de fuite stator $\psi_{Sd} + j \cdot \psi_{Sq}$,
$\varphi_m$ : flux permanent,
$\psi_{Sd}$ : flux de fuite stator d'axe d,
$\psi_{Sq}$ : flux de fuite stator d'axe q,
$L_d$ : inductance d'axe d,
$L_q$ : inductance d'axe q,
$u_S$ : tension stator,
$R_S$ : résistance stator,
$I_S$ : courant stator,
$\omega$ : vitesse rotor (correspondant à $n_p \times$ vitesse mécanique),
$J$ : inertie,
$n_p$ : nombre de paires de pôles,
$\tau_{EM}$ : couple électromagnétique,
$\tau$ : couple moteur,
$\alpha_{x,y}$ : paramètres de saturation magnétique.

2. Procédé selon la revendication 1, **caractérisé en ce que** l'étape de détermination des paramètres ($\alpha_{x,y}$) de saturation magnétique comporte une étape d'extraction de l'amplitude de l'oscillation du courant obtenue.

3. Procédé selon la revendication 1 ou 2, **caractérisé en ce que** l'étape de détermination des paramètres de saturation magnétique comporte une étape d'estimation desdits paramètres de saturation magnétique en fonction de l'amplitude de l'oscillation du courant obtenue.

4. Procédé selon l'une des revendications 1 à 3, **caractérisé en ce que** la séquence de tension comporte :

    - une étape d'application d'un signal en tension statique sur l'axe du couple et d'un signal en tension à haute fréquence sur l'axe du flux, ou
    - une étape d'application d'un signal en tension statique sur l'axe de flux et d'un signal en tension à haute fréquence sur l'axe du couple.

5. Procédé selon l'une des revendications 1 à 4, **caractérisé en ce qu'**il comporte une étape d'utilisation desdits paramètres ($\alpha_{x,y}$) de saturation pour déterminer une correction ($\varepsilon_{Offset}$) sur l'erreur d'angle ($\varepsilon$) existant entre la position d'un repère de commande défini par l'axe de flux et l'axe de couple et une position du rotor du moteur électrique.

6. Procédé de commande selon la revendication 5, **caractérisé en ce que** ladite correction ($\varepsilon_{Offset}$) est appliquée à l'erreur d'angle ($\varepsilon$).

7. Procédé de commande selon la revendication 5, **caractérisé en ce que** ladite correction ($\varepsilon_{Offset}$) est appliquée à un courant de flux de référence et à un courant de couple de référence déterminés en entrée de la loi de commande.

8. Convertisseur de puissance comportant un onduleur (INV) connecté à un moteur électrique (M) synchrone à aimants permanents qui comporte un rotor et un stator, ledit moteur électrique (M) étant modélisé dans le convertisseur de puissance par un modèle mathématique des courants du moteur électrique exprimant un courant de flux ($I_{Sd}$) et un courant de couple ($I_{Sq}$) en fonction de paramètres ($\alpha_{x,y}$) de saturation magnétique, représentatifs de la saturation magnétique mutuelle entre le rotor et le stator du moteur électrique et de la saturation magnétique intrinsèque du rotor et du stator, le convertisseur de puissance comportant des moyens de commande agencés pour appliquer au moteur électrique (M) une séquence de tension comportant un signal en tension statique et un signal en tension à haute fréquence suivant l'axe du flux et/ ou l'axe du couple du moteur, en vue d'entraîner une oscillation du courant sur l'axe du flux et/ou sur l'axe du couple, des moyens de mesure de l'oscillation du courant obtenue sur l'axe du flux et/ou sur l'axe du couple, des moyens de détermination des paramètres de saturation magnétique en fonction de ladite oscillation du courant. **caractérisé en ce que** le modèle mathématique du moteur électrique est de type Hamilton-Lagrange et suit l'expression suivante :

$$H_{mS}\left(\psi_{Sd}, \psi_{Sq}\right) = \frac{\psi_{Sd}^{2}}{2 \cdot L_{d}} + \frac{\psi_{Sq}^{2}}{2 \cdot L_{q}}$$
$$+ \alpha_{3,0} \cdot \psi_{Sd}^{3} + \alpha_{1,2} \cdot \psi_{Sd}\psi_{Sq}^{2} + \alpha_{4,0} \cdot \psi_{Sd}^{4} + \alpha_{2,2} \cdot \psi_{Sd}^{2}\psi_{Sq}^{2} + \alpha_{0,4} \cdot \psi_{Sq}^{4}$$

Dans laquelle :

$\psi_{S}$ : écriture complexe du flux de fuite stator $\psi_{Sd}$ + j·$\psi_{Sq}$,
$\varphi_{m}$ : flux permanent,
$\psi_{Sd}$ : flux de fuite stator d'axe d,
$\psi_{Sq}$ : flux de fuite stator d'axe q,
$L_{d}$ : inductance d'axe d,
$L_{q}$ : inductance d'axe q,
$u_{S}$ : tension stator,
$R_{S}$ : résistance stator,
$I_{S}$ : courant stator,
$\omega$ : vitesse rotor (correspondant à $n_{p} \times$ vitesse mécanique),
J : inertie,
$n_{p}$ : nombre de paires de pôles,
$\tau_{EM}$ : couple électromagnétique,
$\tau$ : couple moteur,
$\alpha_{x,y}$ : paramètres de saturation magnétique.

9. Convertisseur de puissance selon la revendication 8, **caractérisé en ce qu'**il est de type variateur de vitesse.

**Patentansprüche**

1. Steuerverfahren, das in einem Stromwandler eingesetzt wird, umfassend einen Wechselrichter (INV), der an einen Synchron-Elektromotor (M) mit Dauermagneten angeschlossen ist, umfassend einen Rotor und einen Stator, wobei der Elektromotor (M) in dem Stromwandler durch ein mathematisches Modell der Ströme des Elektromotors modelliert wird, das einen Flussstrom ($I_{Sd}$) und einen Drehmomentstrom ($I_{Sq}$) in Abhängigkeit von magnetischen Sättigungsparametern ($\alpha_{x,y}$), die für die wechselseitige magnetische Sättigung zwischen dem Rotor und dem Stator des Elektromotors und die intrinsische magnetische Sättigung des Rotors und des Stators repräsentativ sind, ausdrückt, wobei das Steuerverfahren umfasst:

- einen Schritt des Anlegens an den Elektromotor einer Spannungsfolge, umfassend ein Signal bei statischer Spannung und ein Signal bei Hochfrequenzspannung entlang der Achse des Flusses und/oder der Achse des Drehmoments des Motors, der zu einer Schwingung des Stroms auf der Achse des Flusses und/oder auf der Achse des Drehmoments führt;
- einen Schritt des Messens der Schwingung des Stroms, die auf der Achse des Flusses und/oder auf der Achse des Drehmoments erhalten wird,
- einen Schritt der Bestimmung der Sättigungsparameter,

**dadurch gekennzeichnet, dass** das mathematische Modell des Elektromotors vom Hamilton-Lagrange-Typ ist und durch folgenden Ausdruck gegeben ist:

$$H_{mS}\left(\psi_{Sd}, \psi_{Sq}\right) = \frac{\psi_{Sd}^{2}}{2 \cdot L_{d}} + \frac{\psi_{Sq}^{2}}{2 \cdot L_{q}}$$
$$+ \alpha_{3,0} \cdot \psi_{Sd}^{3} + \alpha_{1,2} \cdot \psi_{Sd}\psi_{Sq}^{2} + \alpha_{4,0} \cdot \psi_{Sd}^{4} + \alpha_{2,2} \cdot \psi_{Sd}^{2}\psi_{Sq}^{2} + \alpha_{0,4} \cdot \psi_{Sq}^{4}$$

wobei:

$\psi_{S}$: komplexe Schrift des Leckageflusses des Stators $\psi_{Sd}$ + j. $\psi_{Sq}$,
$\varphi_{m}$: permanenter Fluss,
$\psi_{Sd}$: Leckagefluss Stator mit der Achse d,
$\psi_{Sq}$: Leckagefluss Stator mit der Achse q,
$L_{d}$: Induktanz mit der Achse d,
$L_{q}$: Induktanz mit der Achse q,
$u_{S}$: Spannung Stator,
$R_{S}$: Widerstand Stator,
$I_{S}$: Strom Stator,
$\omega$: Geschwindigkeit Rotor (entsprechend $n_{p}$ x mechanische Geschwindigkeit),
J: Trägheit,
$n_{p}$: Anzahl von Polpaaren
$\tau_{EM}$: elektromagnetisches Drehmoment,
$\tau$: Motordrehmoment,
$\alpha_{x,y}$: magnetische Sättigungsparameter.

2. Verfahren nach Anspruch 1, **dadurch gekennzeichnet, dass** der Schritt der Bestimmung der magnetischen Sättigungsparameter ($\alpha_{x,y}$) einen Schritt der Extraktion der Amplitude der erhaltenen Schwingung des Stroms umfasst.

3. Verfahren nach Anspruch 1 oder 2, **dadurch gekennzeichnet, dass** der Schritt der Bestimmung der magnetischen Sättigungsparameter einen Schritt der Schätzung der magnetischen Sättigungsparameter in Abhängigkeit von der Amplitude der erhaltenen Schwingung des Stroms umfasst.

4. Verfahren nach einem der Ansprüche 1 bis 3, **dadurch gekennzeichnet, dass** die Spannungsfolge umfasst:

- einen Schritt des Anlegens eines Signals bei statischer Spannung an die Achse des Drehmoments und eines Signals bei Hochfrequenzspannung an die Achse des Flusses, oder
- einen Schritt des Anlegens eines Signals bei statischer Spannung an die Achse des Flusses und eines Signals bei Hochfrequenzspannung an die Achse des Drehmoments.

5. Verfahren nach einem der Ansprüche 1 bis 4, **dadurch gekennzeichnet, dass** es einen Schritt der Verwendung der Sättigungsparameter ($\alpha_{x,y}$) zur Bestimmung einer Korrektur ($\varepsilon_{Offset}$) am Winkelfehler ($\varepsilon$), der zwischen der Position einer Steuermarkierung, die durch die Flussachse und die Drehmomentachse definiert ist, und einer Position des Rotors des Elektromotors umfasst.

6. Steuerverfahren nach Anspruch 5, **dadurch gekennzeichnet, dass** die Korrektur ($\varepsilon_{Offset}$) an dem Winkelfehler ($\varepsilon$) angewandt wird.

7. Steuerverfahren nach Anspruch 5, **dadurch gekennzeichnet, dass** die Korrektur ($\varepsilon_{Offset}$) an einem Referenzflussstrom und an einem Referenzdrehmomentstrom, die am Eingang des Steuergesetzes bestimmt werden, angelegt wird.

8. Stromwandler, umfassend einen Wechselrichter (INV), der an einen Synchron-Elektromotor (M) mit Dauermagneten angeschlossen ist, umfassend einen Rotor und einen Stator, wobei der Elektromotor (M) in dem Stromwandler durch ein mathematisches Modell der Ströme des Elektromotors modelliert wird, das einen Flussstrom ($I_{Sd}$) und einen Drehmomentstrom ($I_{Sq}$) in Abhängigkeit von magnetischen Sättigungsparametern ($\alpha_{x,y}$), die für die wechselseitige magnetische Sättigung zwischen dem Rotor und dem Stator des Elektromotors und die intrinsische magnetische Sättigung des Rotors und des Stators repräsentativ sind, ausdrückt, wobei der Stromwandler Mittel umfasst, die dazu vorgesehen sind, an den Elektromotor eine Spannungsfolge anzulegen, umfassend ein Signal bei statischer Spannung und ein Signal bei Hochfrequenzspannung entlang der Achse des Flusses und/oder der Achse des Drehmoments des Motors, der zu einer Schwingung Mittel zum Messen der Schwingung des Stroms, die auf der Achse des Flusses und/oder auf der Achse des Drehmoments erhalten wird, Mittel zur Bestimmung der Sättigungsparameter in Abhängigkeit von der Schwingung des Stroms,
**dadurch gekennzeichnet, dass** das mathematische Modell des Elektromotors vom Hamilton-Lagrange-Typ ist und durch folgenden Ausdruck gegeben ist:

$$H_{mS}\left(\psi_{Sd}, \psi_{Sq}\right) = \frac{\psi_{Sd}^{\,2}}{2 \cdot L_d} + \frac{\psi_{Sq}^{\,2}}{2 \cdot L_q}$$

$$+ \alpha_{3,0} \cdot \psi_{Sd}^{\,3} + \alpha_{1,2} \cdot \psi_{Sd}\psi_{Sq}^{\,2} + \alpha_{4,0} \cdot \psi_{Sd}^{\,4} + \alpha_{2,2} \cdot \psi_{Sd}^{\,2}\psi_{Sq}^{\,2} + \alpha_{0,4} \cdot \psi_{Sq}^{\,4}$$

wobei:

$\psi_S$: komplexe Schrift des Leckageflusses des Stators $\psi_{Sd}$ + j. $\psi_{Sq}$,
$\varphi_m$: permanenter Fluss,
$\psi_{Sd}$: Leckagefluss Stator mit der Achse d,
$\psi_{Sq}$: Leckagefluss Stator mit der Achse q,
$L_d$: Induktanz mit der Achse d,
$L_q$: Induktanz mit der Achse q,
$u_S$: Spannung Stator,
$R_S$: Widerstand Stator,
$I_S$: Strom Stator,
$\omega$: Geschwindigkeit Rotor (entsprechend $n_p$ x mechanische Geschwindigkeit),
J: Trägheit,
$n_p$: Anzahl von Polpaaren
$\tau_{EM}$: elektromagnetisches Drehmoment,
$\tau$: Motordrehmoment,
$\alpha_{x,y}$: magnetische Sättigungsparameter.

**9.** Stromwandler nach Anspruch 8, **dadurch gekennzeichnet, dass** er vom Typ Drehzahlregler ist.

**Claims**

**1.** A control method implemented in a power converter comprising an inverter (INV) connected to a permanent magnet synchronous electric motor (M) comprising a rotor and a stator, said electric motor (M) being modeled in the power converter by a mathematical model of the currents of the electric motor expressing a flux current ($I_{Sd}$) and a torque current ($I_{Sq}$) as a function of magnetic saturation parameters ($\alpha_{x,y}$), representative of the mutual magnetic saturation between the rotor and the stator of the electric motor and of the intrinsic magnetic saturation of the rotor and of the stator, the control method comprising:

- a step of application to the electric motor of a voltage sequence comprising a steady-state voltage signal and a high-frequency voltage signal along the axis of the flux and/or the axis of the torque of the motor, resulting in an oscillation of the current on the axis of the flux and/or on the axis of the torque,
- a step of measurement of the oscillation of the current obtained on the axis of the flux and/or on the axis of the torque,
- a step of determination of the saturation parameters,

**characterized in that** the mathematical model of the electric motor is of Hamilton-Lagrange type and follows the

following expression:

$$H_{mS}\left(\psi_{Sd}, \psi_{Sq}\right) = \frac{\psi_{Sd}^2}{2 \cdot L_d} + \frac{\psi_{Sq}^2}{2 \cdot L_q}$$

$$+ \alpha_{3,0} \cdot \psi_{Sd}^3 + \alpha_{1,2} \cdot \psi_{Sd} \psi_{Sq}^2 + \alpha_{4,0} \cdot \psi_{Sd}^4 + \alpha_{2,2} \cdot \psi_{Sd}^2 \psi_{Sq}^2 + \alpha_{0,4} \cdot \psi_{Sq}^4$$

in which:

$\psi_S$ : complex writing of the stator leakage flux $\psi_{Sd} + j \cdot \psi_{Sq}$,
$\varphi_m$ : permanent flux,
$\psi_{Sd}$ : d-axis stator leakage flux,
$\psi_{Sq}$ : q-axis stator leakage flux,
$L_d$ : d-axis inductance,
$L_q$ : q-axis inductance,
$u_S$ : stator voltage,
$R_S$ : stator resistance,
$I_S$ : stator current,
$\omega$ : rotor speed (corresponding to $n_p \times$ mechanical speed),
$J$ : inertia,
$n_p$ : number of pairs of poles,
$\tau_{EM}$ : electromagnetic torque,
$\tau$ : motor torque,
$\alpha_{x,y}$ : magnetic saturation parameters.

2. The method as claimed in claim 1, **characterized in that** the step of determination of the magnetic saturation parameters ($\alpha_{x,y}$) comprises a step of extraction of the amplitude of the oscillation of the current obtained.

3. The method as claimed in claim 1 or 2, **characterized in that** the step of determination of the magnetic saturation parameters comprises a step of estimation of said magnetic saturation parameters as a function of the amplitude of the oscillation of the current obtained.

4. The method as claimed in one of claims 1 to 3, **characterized in that** the voltage sequence comprises:

- a step of application of a steady-state voltage signal on the axis of the torque and a high-frequency voltage signal on the axis of the flux, or
- a step of application of a steady-state voltage signal on the axis of the flux and of a high-frequency voltage signal on the axis of the torque.

5. The method as claimed in one of claims 1 to 4, **characterized in that** it comprises a step of use of said saturation parameters ($\alpha_{x,y}$) to determine a correction ($\varepsilon_{Offset}$) to the angle error ($\varepsilon$) existing between the position of a control marker defined by the axis of flux and the axis of torque and a position of the rotor of the electric motor.

6. The control method as claimed in claim 5, **characterized in that** said correction ($\varepsilon_{Offset}$) is applied to the angle error ($\varepsilon$).

7. The control method as claimed in claim 5, **characterized in that** said correction ($\varepsilon_{Offset}$) is applied to a reference flux current and to a reference torque current determined as input for the control law.

8. A power converter comprising an inverter (INV) connected to a permanent magnet synchronous electric motor (M) which comprises a rotor and a stator, said electric motor (M) being modeled in the power converter by a mathematical model of the currents of the electric motor expressing a flux current ($I_{Sd}$) and a torque current ($I_{Sq}$) as a function of magnetic saturation parameters ($\alpha_{x,y}$), representative of the mutual magnetic saturation between the rotor and the stator of the electric motor and of the intrinsic magnetic saturation of the rotor and of the stator, the power converter comprising control means arranged to apply to the electric motor (M) a voltage sequence comprising a steady-state voltage signal and a high-frequency voltage signal along the axis of the flux and/or the axis of the torque of the motor, in order to cause an oscillation of the current on the axis of the flux and/or on the axis of the torque, means for measuring the oscillation of the current obtained on the axis of the flux and/or on the axis of the torque, means for determining the magnetic saturation parameters as a function of said oscillation of the current, **characterized in that** the mathematical model of the electric motor is of Hamilton-Lagrange type and follows the following expression:

$$H_{mS}\left(\psi_{Sd}, \psi_{Sq}\right) = \frac{\psi_{Sd}^{2}}{2 \cdot L_{d}} + \frac{\psi_{Sq}^{2}}{2 \cdot L_{q}}$$
$$+ \alpha_{3,0} \cdot \psi_{Sd}^{3} + \alpha_{1,2} \cdot \psi_{Sd} \psi_{Sq}^{2} + \alpha_{4,0} \cdot \psi_{Sd}^{4} + \alpha_{2,2} \cdot \psi_{Sd}^{2} \psi_{Sq}^{2} + \alpha_{0,4} \cdot \psi_{Sq}^{4}$$

in which:

$\psi_{S}$ : complex writing of the stator leakage flux $\psi_{Sd}$ + j·$\psi_{Sq}$,
$\varphi_{m}$ : permanent flux,
$\psi_{Sd}$ : d-axis stator leakage flux,
$\psi_{Sq}$ : q-axis stator leakage flux,
$L_{d}$ : d-axis inductance,
$L_{q}$ : q-axis inductance,
$u_{S}$ : stator voltage,
$R_{S}$ : stator resistance,
$I_{S}$ : stator current,
$\omega$ : rotor speed (corresponding to $n_{p}$ $\times$ mechanical speed),
$J$ : inertia,
$n_{p}$ : number of pairs of poles,
$\tau_{EM}$ : electromagnetic torque,
$\tau$ : motor torque,
$\alpha_{x,y}$ : magnetic saturation parameters.

**9.** The power converter as claimed in claim 8, **characterized in that** it is of variable speed drive type.

*Fig. 1A*

*Fig. 1B*

*Fig. 1C*

Courant
statique axe d

Fig. 2A

Fig. 2B

Fig. 2C

*Fig. 3A*

*Fig. 3B*

*Fig. 3C*

Courant statique
axe d

*Fig. 4A*

*Fig. 4B*

*Fig. 4C*

18

Fig. 5A

Fig. 5B

**Fig. 6**

**EP 2 684 289 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2010246318 B

**Littérature non-brevet citée dans la description**

- **DAVID REIGOSA et al.** *Measurement and Adaptative Decoupling of Cross Saturation Effects and Secondary Saliencies in Sensorless-Controlled IPM Synchronous Machines,* ISBN 978-1-4244-1259-4

- **LI Y et al.** *Improved Rotor Position Estimation by Signal Injection Brushless AC Motors, Accounting for Cross-Coupling Magnetic Saturation,* ISBN 978-1-4244-1259-4